# EUROPÄISCHE PATENTSCHRIFT

(11) **EP 0 619 217 B1**
(45) Veröffentlichungstag und Bekanntmachung des Hinweises auf die Patenterteilung: **13.12.1995**
(21) Anmeldenummer: 94101538.0
(22) Anmeldetag: 02.02.1994
(51) Int. Cl.: B62D 35/00

(54) **Seitenverkleidung für Nutzfahrzeuge**
Side panel for commercial vehicles
Panneau latéral pour véhicules commerciaux

(30) Priorität: 22.03.1993 DE 4309100
(43) Veröffentlichungstag der Anmeldung: 12.10.1994
(73) Patentinhaber: MERCEDES-BENZ AG, 70327 Stuttgart (DE)
(72) Erfinder: Pedrotti, Wolfgang, Dipl.-Ing., D-73760 Ostfildern (DE); Hänssler, Wolfgang, Dipl.-Ing., D-73092 Heiningen (DE); Barz, Wolf-Rüdiger, Dipl.-Ing., D-70736 Fellbach (DE); Minet, Martin, Dipl.-Ing., D-71404 Korb (DE)

(56) Entgegenhaltungen:
- DE-A- 2 537 217

## Beschreibung

Die Erfindung betrifft eine Seitenverkleidung für Nutzfahrzeuge mit einem Verkleidungselement, das sich in Fahrzeuglängsrichtung zwischen Kotflügeln erstreckt, die über Tragelemente am Fahrzeugrahmen befestigt sind. Ein derartige Seitenverkleidung ist aus der DE-A-2 537 217 bekannt.

Aufgabe der Erfindung ist es eine Seitenverkleidung für Nutzfahrzeuge zu schaffen, die von der Gestaltung des Rahmens des Fahrzeugs unabhängig ist.

Die Aufgabe der Erfindung wird dadurch gelöst, daß das Verkleidungselement unmittelbar und/oder mittelbar über ein Seitenelement an den Tragelementen der Kotflügel befestigt ist.

Die Verkleidungselemente sind somit nicht selbst am Fahrzeugrahmen befestigt und daher von der Gestaltung des Rahmens, beispielsweise bezüglich der zu verkleidenden Länge, unabhängig. Ein weiterer Vorteil der Befestigung der Verkleidungselemente an den Kotflügeln oder an deren Tregeelementen ist, daß dadurch der zwischen Verkleidungselement und Fahrzeugrahmen zur Verfügung stehende Bauraum nicht beeinträchtigt wird und somit keine Einschränkungen bei der Anordnung von am Fahrzeugrahmen zu befestigenden Bauteilen, wie Auspuff, Getriebeträger, Luftkessel und Kraftstofftank, durch die Anbringung der Verkleidungselemente entstehen.

Zweckmäßige Ausgestaltungen der Erfindung können auch den Ansprüchen entnommen werden; im übrigen ist die Erfindung an Hand des in den Zeichnungen dargestellten Ausführungsbeispieles nachfolgend noch erläutert; dabei zeigt:
- Fig. 1:: eine Ansicht einer erfindungsgemäßen Seitenverkleidung,
- Fig. 2:: eine Ansicht der Verkleidungselemente,
- Fig. 3:: ein Trageelement, an dem einerseits ein Seitenteil eines Kotflügels befestigt werden kann und an dem ein Halter für das Verkleidungselement angebracht ist,
- Fig. 4:: eine andere Ausführung des Tregeelementes, auf das das Seitenelement eines Kotflügels aufsteckbar ist und

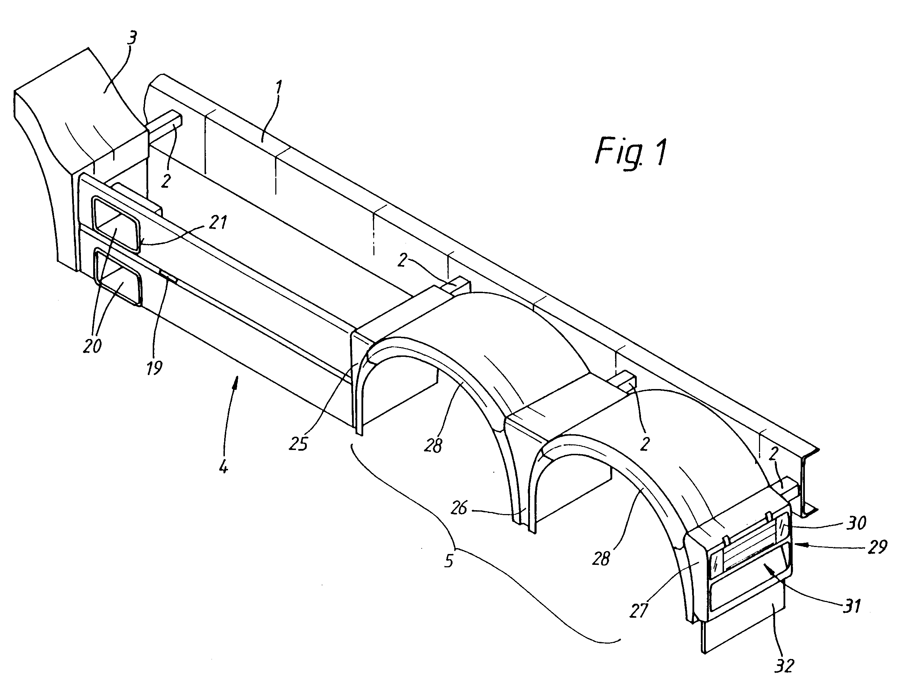

Die Figur 1 zeigt eine perspektivische Darstellung einer modularen Seitenverkleidung einer linken Fahrzeugseite. Die Seitenverkleidung ist mittels der von der Außenseite des Fahrzeugrahmens 1 abragenden Trageelemente 2 an dem Fahrzeugrahmen 1 befestigt. Dabei besteht die Seitenverkleidung aus einem Vorderachskotflügel 3, einem selbsttragenden Verkleidungselement 4 und einem aus einem Paar Seitenelementen 25,27, einem Zwischenelement 26 und aus zwei Abdeckhauben 28 gebildeten Kotflügel 5. Als besonders geeigneter Befetigungsort am Fahrzeugrahmen bietet sich der Längsträger an.

In vorteilhafter Weise sind die Lampen 19 der Fahrzeugseitenbeleuchtung in das Verkleidungselement 4 integriert. Desweiteren ist es von Vorteil im Fall der Verwendung der Seitenverkleidung bei Sattelzügen, in die Verkleidungselemente 4 Trittstufen 20 zu integrieren. Dies ist durch direkt eingeformte Trittstufen 20 möglich. Andererseits führt es zu einer weiteren Vereinfachung der Bauteile, wenn die Trittstufe 20 nachträglich in das Verkleidungselement 4 einbringbar ist. Es ist von Vorteil wenn das selbsttragende Verkleidungselement 4 so geformt ist, daß es auch die notwendige Steifheit mitbringt um als seitlicher Unterfahrschutz zu dienen.

Durch eine spiegelsymmetrische Ausbildung des Kotflügels 5 ist es möglich, den gleichen Kotflügel auf beiden Längsseiten des Fahrzeuges zu verwenden. Wird das Verkleidungselement 4 an dem Kotflügel 5 befestigt, so ist es zur spiegelsymmetrischen Ausbildung notwendig, an beiden Enden des Kotflügels 5 eine Befestigung vorzusehen. An dem in Fahrtrichtung gesehen hinteren Kotflügel ist dann an der Fahrzeugrückseite stets eine für die Anbringung des Verkleidungselementes 4 nicht benötigte Befestigung vorhanden, die in vorteilhafter Weise zur Anbringung eines Rückleuchtenträgers 29 und eines Spritzwasserschutzes 32 genutzt werden. Der Spritzwasserschutz kann üblicherweise aus einem Spritzlappen oder einem Lochblech gebildet werden. Der Rückleuchtenträger kann so ausgestaltet sein, daß sowohl eine Mulde zur Aufnahme des Fahrzeugkennzeichens 31 als auch der Rückleuchten 30 vorhanden ist.

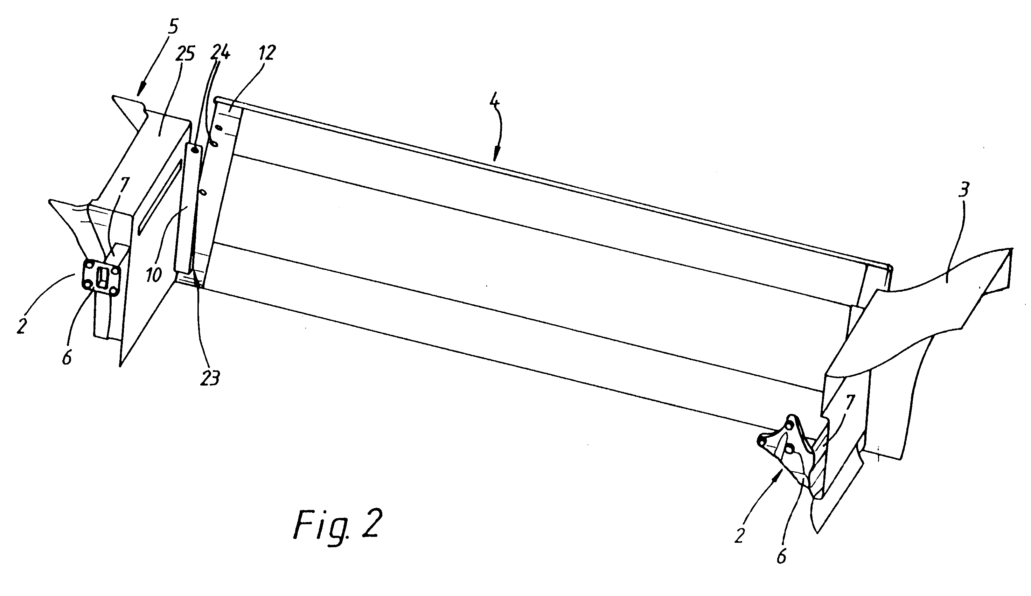

Die Figur 2 zeigt eine Ansicht des Verkleidungselements 4 aus der dem Fahrzeugrahmen zugewandten Seite. Es ist von Vorteil, das Verkleidungselement 4 aus billig herzustellenden Grundelementen zu bilden. Das Verkleidungselement 4 ist deshalb beispielsweise aus Strangpreßprofilen hergestellt, die in die für das Fahrzeug benötigte Größe abgelängt werden. Um das Verkleidungselement 4 möglichst leicht zu gestalten wird als Werkstoff vorzugsweise Aluminium verwendet. Die gewünschte Steife kann dann durch die Profilgebung erreicht werden. Alternativ dazu ist es dabei auch möglich das Verkleidungselement 4 aus thermoplastischem Kunststoff herzustellen. In der dargestellten Ausführung das Verkleidungselement 4 über ein Scharnier 23 befestigt. Das Scharnier 23 erlaubt ein Aufklappen des Verkleidungselementes 4, um den leichteren Zugang zu dahinterliegenden Fahrzeugteilen, wie beispielsweise dem Fahrzeugtank zu gewähren. Dabei ist zu beachten, daß das Scharnier 23 genügend Spiel aufweist, um die thermische Ausdehnung des Verkleidungselementes abzufangen. Die geschlossene Stellung des Verkleidungselementes 4 wird durch einen, ebenfalls zum Längsspielausgleich geeigneten Verschluß 24, wie einem Nockenverschluß, gesichert. Es spielt dabei keine Rolle ob das Verkleidungselement 4 oben oder unten angelenkt ist.

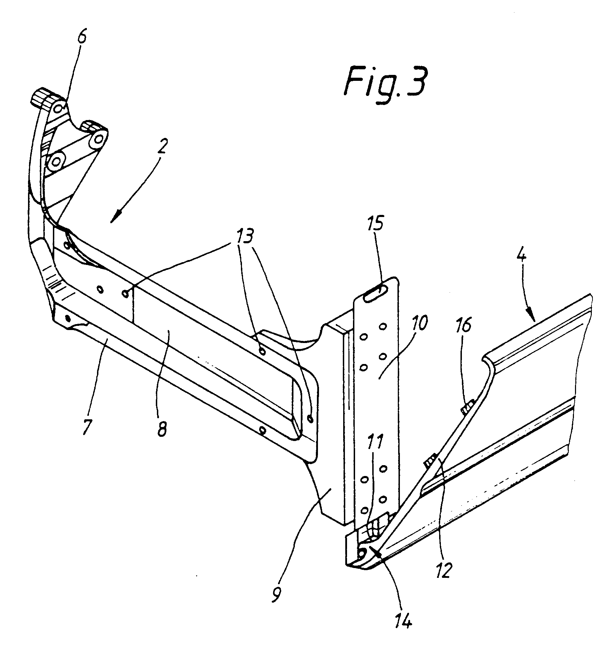

Die Fig. 3 zeigt eine Ansicht eines am Fahrzeugrahmen 1 zu befestigenden Trageelementes 2. Der Lagerbock 6 wird fest mit dem Längsträger 1 verbunden. Der Tragarm 7 ragt von dem Lagerbock 6 ab. Über die Länge des Tragarmes 7 wird der seitliche Abstand der Verkleidungselemente vom Fahrzeug bestimmt. In der dargestellten Ausführung weist er eine Sicke 8 zur lagedefinierten Aufnahme des Seitenelementes eines Kotflügels auf. Die Befestigung des Kotflügels erfolgt beispielsweise durch Schrauben oder Niete an den Bohrungen 13. Auf der anderen Seite des Tragarms 7 ist zur Befestigung eines Verkleidungselements 4 der Halter 9 befestigt. An dem Halter ist das den Scharnierdorn 11 aufweisende Band 10 angeordnet. Die an einer Stelle durchbrochene Öse 14 des Haltebandes 12 vervollständigt das Scharnier 23. An dem Halteband 12 ist die zumindest eine Planke 22 des Verkleidungselementes 4 befestigt. Die durchbrochene Öse 14 erlaubt ein einfaches Aushängen des Verkleidungselementes 4. An der dem Scharnierdorn 11 abgewandten Seite des Bandes 10 ist ein Langloch 15 angebracht. In Schließstellung des Verschlusses 24 wird das Langloch 15 von der Nocke 16 hintergriffen. Durch das Langloch 15 und ein Längsspiel der Öse 14 an dem Scharnierdorn 11 wird in einfacher Weise das Notwendige Spiel für die thermische Längsausdehnung des Verkleidungselementes 4 geschaffen.

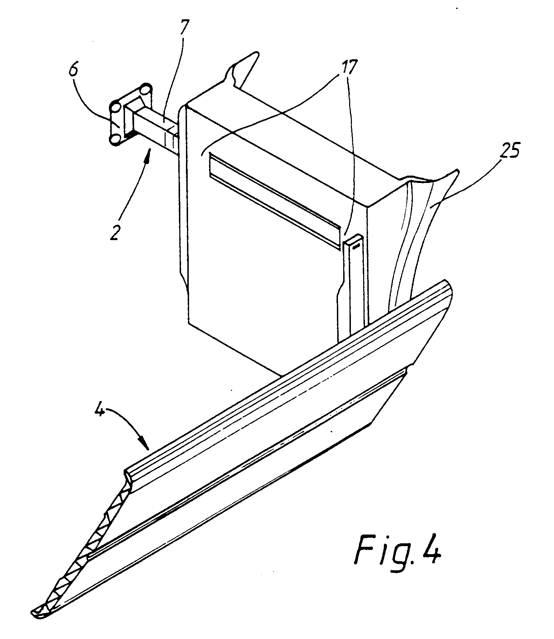

Die Figur 4 zeigt eine andere Ausführungsform des Trageelementes 2. Bei dieser Ausführung soll zur vorteilhaften Montageerleichterung der Kotflügel 5 auf den Tragarm 7 aufschiebbar sein. Dazu ist der Tragarm 7 als einfacher, von dem Lagerbock 6 abragender Profilstab ausgebildet. Der Kotflügel 5 weist eine den Tragearm 7 umgreifende Führung 17 auf, die dem Profil des Tragarmes 7 negativ entsprechend ausgebildet ist. Gegen durch Vibrationen verursachtes langsames herausgleiten des Kotflügels 5 aus dem Tragarm 7 wird die Lage des Kotflügels 5 am Tragarm 7 durch zumindest eine Halteschraube 18, Clips, Splint oder ähnliches gesichert. Das Band 29 ist dabei entweder direkt am Kotflügel 5 angeformt oder an dieses angebracht. Die Befestigung des Verkleidungselementes 4 erfolgt hierbei also nicht direkt am Trageelement 2 sondern am Kotflügels 5.

Desweiteren ist in der Figur 4 ein Schnitt durch das Verkleidungselement 4 dargestellt. In dem Schnitt ist die innere Struktur erkenntlich, die dem in diesem Beispiel aus einem thermoplastischen Kunststoff hergestellten Verbindungselement 4 die Eigensteife gibt, um selbsttragend zu sein.

## Patentansprüche

1. Seitenverkleidung für Nutzfahrzeuge, mit einem Verkleidungselement (4) das sich in Fahrzeuglängsrichtung (4) zwischen Kotflügeln (3,5) erstreckt, die über Trageelemente (2) am Fahrzeugrahmen (1) befestigt sind,
**dadurch gekennzeichnet,**
daß das Verkleidungselement (4) unmittelbar und/oder mittelbar über ein Seitenelement (25) an den Trageelementen (2) der Kotflügel (3,5) befestigt ist.

2. Seitenverkleidung nach Anspruch 1,
**dadurch gekennzeichnet,**
daß das Verkleidungselement (4) um eine Längsachse schwenkbar angeordnet ist.

3. Seitenverkleidung nach Anspruch 1,
**dadurch gekennzeichnet,**
daß das Verkleidungselement (4) selbsttragend ausgebildet und von einem Grundmaß auf die gewünschte Länge ablängbar ist.

4. Seitenverkleidung nach Anspruch 1,
**dadurch gekennzeichnet,**
daß die Trageelemente (2) aus Profilstäben gebildet sind und daß die Kotflügel (3,5) das Seitenelement (25,27) mit einer Führung (17) aufweisen, die negativ entsprechend dem Profil des Trageelementes (2) ausgeformt ist, so daß die Führung (17) das Trageelement (2) umgreift, wodurch der Kotflügel (3,5) mittels der Seitenelemente (25,27) durch Aufschieben am Trageelement (2) befestigbar ist.

5. Seitenverkleidung nach Anspruch 1,
**dadurch gekennzeichnet,**
daß das Tragelement (2) Befestigungsstellen (8,13) für den Kotflügel aufweist.

## Claims

1. Side-panelling for commercial vehicles, with a panelling member (4) which extends, in a longitudinal direction of a vehicle concerned (4), between fender members (3, 5) which are attached to a chassis (1) by means of support members (2),
**wherein**
a panelling member (4) is directly or indirectly attached onto support members (2) of fender members (3, 5), by means of a lateral member (25).

2. Side-panelling in accordance with claim 1,
**wherein**
a panelling member (4) is disposed such that it can pivot about a longitudinal axis.

3. Side-panelling in accordance with claim 1,
**wherein**
a panelling member (4) is developed such that it is self-supporting and can be cut to length on a basis of a standard measurement.

4. Side-panelling in accordance with claim 1,
**wherein**
support elements (2) are formed of profiled members and fender members (3, 5) have a lateral member (25, 27) with a guidance member (17), which is formed so as to negatively correspond to a cross-section of a support member (2), such that a guidance member (17) surrounds a support member (2), whereby a fender member (3, 5) can be attached onto a support member (2) by means of a lateral member (25, 27), by being pushed onto a said support member (2).

5. Side-panelling in accordance with claim 1,
**wherein**
a support member (2) has points of attachment (8, 13) for a fender member.

## Revendications

1. Habillage latéral pour véhicules utilitaires, comprenant un élément d'habillage (4) qui s étend dans la direction longitudinale (4) du véhicule entre des ailes (3, 5) fixées par des éléments porteurs (2) au châssis (1) du véhicule, caractérisé en ce que l'élément d'habillage (4) est fixé directement et/ou indirectement par un élément latéral (25) aux éléments porteurs (2) des ailes (3, 5).

2. Habillage latéral selon la revendication 1, caractérisé en ce que l'élément d'habillage (4) est monté basculant autour d'un axe longitudinal.

3. Habillage latéral selon la revendication 1, caractérisé en ce que l'élément d'habillage (4) est auto-portant et peut être coupé à la longueur désirée à partir d'une dimension de base.

4. Habillage latéral selon la revendication 1, caractérisé en ce que les éléments porteurs (2) sont formés de barres profilées et que les ailes (3, 5) présentent l'élément latéral (25, 27), lequel est pourvu d'un guidage (17) de forme complémentaire du profil de l'élément porteur (2), de manière que le guidage (17) entoure l'élément porteur (2), de sorte que l'aile (3, 5) peut être fixée au moyen des éléments latéraux (25, 27) par son enfilage sur l'élément porteur (2).

5. Habillage latéral selon la revendication 1, caractérisé en ce que l'élément porteur (2) présente des points de fixation (8, 13) pour l'aile.
